# EUROPEAN PATENT APPLICATION

(11) **EP 1 525 808 A1**
(43) Date of publication of application: **27.04.2005**
(21) Application number: 03425677.6
(22) Date of filing: 21.10.2003
(51) Int. Cl.: A23L 3/04

(54) **Tunnel pasteuriser**

(71) Applicant: SIG Technology Ltd., 8212 Neuhausen Rhine Falls (CH)
(72) Inventor: Panella, Graziano, 37023 Grezzana Verona (IT); Pasoli, Giorgio, 37126 Verona (IT)
(74) Representative: Lanzoni, Luciano

(57) **Abstract**

Tunnel pasteuriser comprising a structure (2) identifying at least a pasteurisation path (3) extending between an entry section (4) and an exit section (5), along which are sequentially obtained at least a heating area (6), at least a heat treatment area (7) and at least a cooling area (8). A conveyor (9), comprising at least a first conveyor belt (11) having a first product loading section (14) coinciding with the entry section (4) and a first product unloading section (15), and a second conveyor belt (12) set side by side to the first conveyor belt (11), with opposite direction of movement, and having a second product loading section (16) and a second product unloading section (17) coinciding with the exit section (5), advances the product along the path (3). The conveyor (9) further comprises transferring means (13) for transferring the product from the first unloading section (15) to the second loading section (16). Spraying means (10) are mounted along said path (3) to spray the products with a fluid at pre-determined temperature in correspondence with each of the aforesaid areas.

## Description

The present invention relates to a tunnel pasteuriser comprising the characteristics expressed in the preamble to claim 1.

As is well known, pasteurisation of packaged food products is the heat treatment whereto are subjected some types of products, already packaged in their final containers, in order to improve their preservation over time.

The type of pasteuriser whereto explicit reference shall be made hereafter is the one conceived for the heat treatment of "low temperature pasteurisation", with specific reference to food products constituted by drinks. This means that the maximum heating of the product does not exceed the temperature of 90°C, and it is achieved by means of hot water which is sprayed in programmed fashion onto the containers of the product to modify the temperature according to a defined thermal cycle.

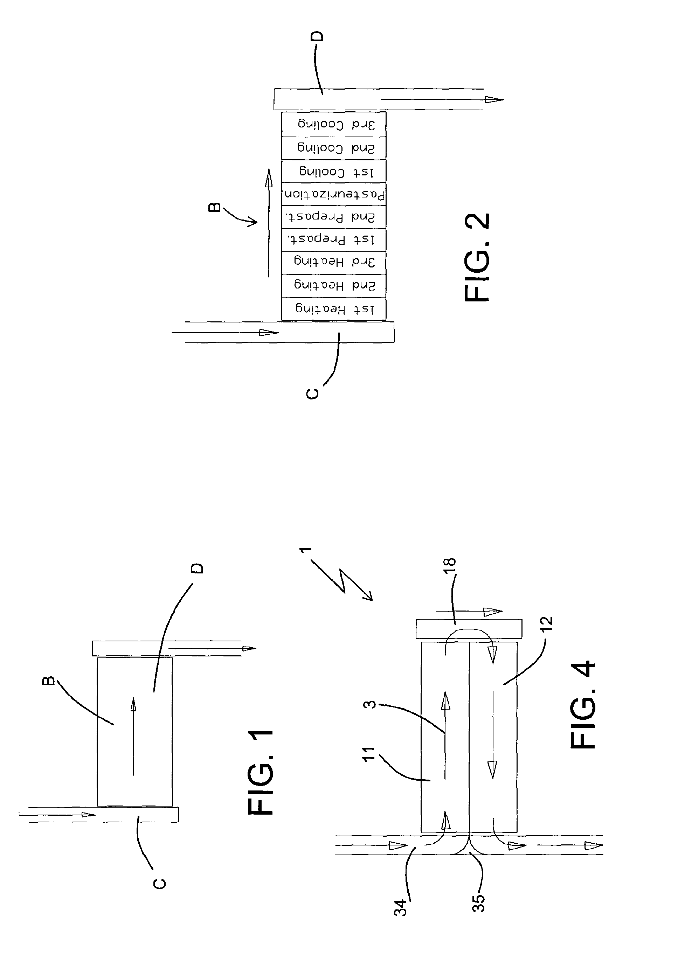

The apparatus whereby the pasteurisation process is accomplished is essentially constituted by a tunnel through which the product, already packaged in its container (bottle, can, or other container), is treated (Figure 1).

From the thermal viewpoint, the tunnel is essentially subdivided into three main areas: a first heating area where the temperature of the product is gradually increased to a determined value; a second heat treatment area in which the product is first brought to the treatment temperature and then kept at this temperature for a given period of time; and a third cooling area where the product is gradually brought back to approximately ambient temperature, in order to prevent undesired fermentation phenomena.

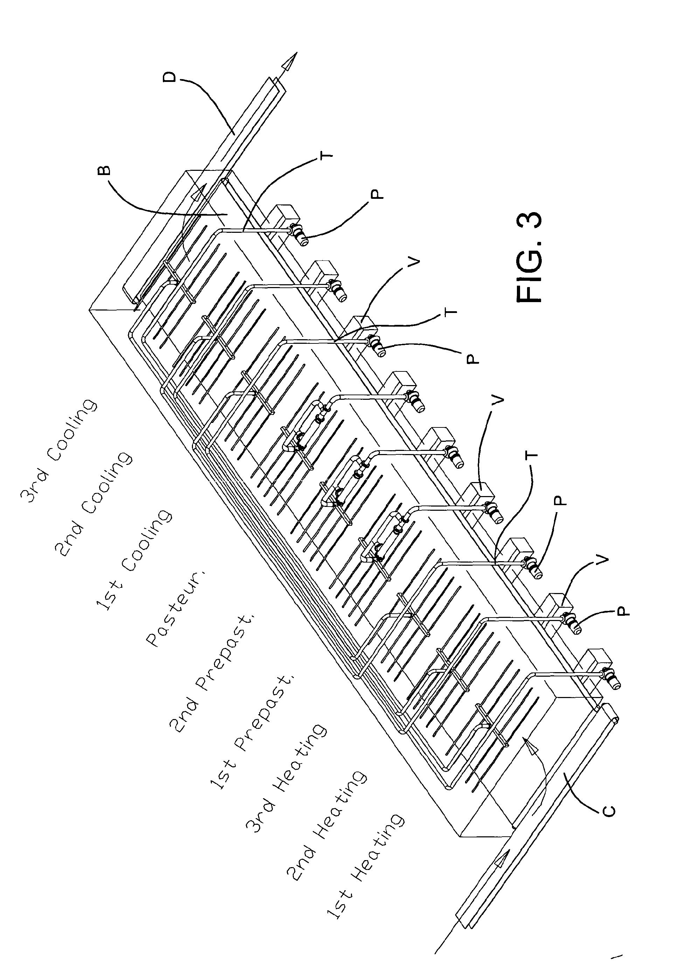

According to the methodology of the prior art, each of said areas is further subdivided into two or more parts for the purpose, on one hand, to prevent thermal shocks and be able to recover heat between the heating and the cooling areas, on the other hand to be able to have available areas at different temperatures, variable according to a determined logic, in the area of the tunnel where the actual heat treatment takes place (Figures 2 and 3).

In particular, the heat treatment area is subdivided into one or more pre-pasteurisation areas and into one or more pasteurisation areas.

In the pasteurisation areas, the temperature of the water exceeds the pasteurisation temperature of the product being treated, in order to bring the product to the pasteurisation temperature in correspondence with the start of the pasteurisation area where the temperature of the water instead nearly coincides with pasteurisation temperature.

Traditionally, the movement of the packaged product inside the pasteurisation tunnel is given by a linear conveyor belt B, and it extends from an entry section of the tunnel to an exit section located at the opposite side of the tunnel.

The conveyor belt can be constituted by a single belt or by two belts, set side by side, moving in the same direction and synchronised.

Along this path, the product sequentially travels through all the heating, treatment and cooling areas, which are physically distinguished from each other, and ends its path from the opposite side of the machine relative to the one wherefrom it had entered.

Figures 2 and 3 show the sequence of the heat treatment areas in a traditional pasteuriser. Generally, one to five heating areas are provided at the start of the process, an equal number of cooling areas at the end of the process, one or more pre-pasteurisation areas and one or more pasteurisation areas in the central part of the process.

To have a not inconsiderable energy recovery, the process water of the heating areas is shared with the corresponding cooling areas according to a technique that is well known in the industry. In particular, the water collected in the tank V of the first heating area is sent to the sprays of the last cooling, the one collected in the water of the second heating is sent to the sprays of the next to last cooling, and so on.

However, this technique presupposes the installation of pipelines T for transporting the process water, which traverse most of the machine in the longitudinal direction forwards and backwards, as shown in Figure 3.

Figure 3 also shows that it is necessary to provide a collecting tank V, a pump P and a system of pipelines T for each area.

Additionally, in a continuous production line, the position of the belt for conveying the product to be treated upon arrival at the pasteuriser C is offset relative to the position of the belt for conveying the treated product leaving the pasteuriser D.

Also known are pasteurisation installations provided with two or more tunnels of the kind described heretofore, mounted one above the other to optimise space in the facility.

However, the prior art described above has a series of drawbacks.

In the first place, due to the offset arrangement of the conveyor belt arriving at the pasteuriser, relative to the departing one, every time a modification is made to the dimensions of the pasteuriser the entire production line needs to be re-arranged.

Additionally, it must be considered that the process water distribution system comprises, in addition to the product spraying conduits, also a collection tank positioned under each sub-area into which the pasteuriser is subdivided.

In this system, to achieve a considerable recovery of heat, the water collected by each tank in the heating area is sent to the spraying conduit of a corresponding cooling are and vice versa, according to a well known methodology, generally implemented by all manufacturers of tunnel pasteurisers (in particular, the first heating area is connected to the last cooling area, the second heating area is connected to the next-to-last cooling area, and so on). Moreover, the two collecting tanks of the two areas thus correlated are mutually connected by means of a compensation conduit which maintains constant the level of the working fluid.

Since the paths of the process water are very long and complex, the dispersion of thermal energy is considerable.

Moreover, the costs of manufacturing the installations are considerable as well, due to the high number of components (pumps, pipelines, tanks).

An attempt to solve this latter problem is proposed in the patent WO 96/02626, which provides for the use of two belts for conveying the product within the tunnel, superposed and moving in mutually opposite directions. The flow of containers coming from the bottling line is thus divided between the lower belt and the upper belt.

The two flows of product therefore travel through the tunnel in mutually opposite directions, one conveyed by the belt of the lower level and the other conveyed by the belt of the upper level.

While this solution does have the advantage that it no longer requires very long pipelines to transport the process water from the initial areas to the final areas of the pasteuriser, with a consequent containment of the thermal dispersion of the pipelines, it is certainly not free of drawbacks.

In additional to the other drawbacks mentioned previously in relation to the first type of pasteurisers described above, in this case it is also necessary to provide two additional conveyor belts at the sides of the machine to transport half the product to and from the upper conveyor belt. This need entails on one hand a considerable increase in installation costs, on the other a greater bulk of the machine.

Secondly, with this type of pasteurisers it is nearly impossible to obtain single-level pasteurisers where the space available is not sufficient for mounting two mutually superposed levels.

In the third place, in this type of installations the quality of the heat treatment of the product is penalised by the fact that it is no longer possible to have a pre-pasteurisation area in the cycle.

The pre-pasteurisation area of the upper (lower) belt would coincide with the pasteurisation are of the lower (upper) belt with the consequence that it would not be possible to provide for different temperatures of the working fluid for the two areas.

Consequently, in this kind of pasteuriser, no system for controlling the heat treatment can be provided because the pasteurisation must be a single one, shared by the two flows of product.

Moreover, if in the same line it is necessary to treat a product that is not to be pasteurised, in the case of both tunnel pasteurisers described heretofore it is necessary to make it pass in any case through the pasteuriser, without activating the heating systems, thus using it as a simple transportation means.

To overcome this drawback, some lines have been provided with a bypass conveyor belt which allows the product to pass from the arrival conveyor belt to the departure conveyor belt without travelling through the pasteuriser. This solution in any case entails an increase in manufacturing costs and in the bulk of the installation.

In this situation, the technical task constituting the basis of the present invention is to obtain a tunnel pasteuriser that overcomes the aforementioned drawbacks.

In particular, a technical task of the present invention is to obtain a tunnel pasteuriser which allows on one hand to reduce the number of the pumps, of the collecting tanks, of the manifolds and of the process water distribution systems, on the other hand to limit heat dispersion.

Another technical task of the present invention is to obtain a tunnel pasteuriser that can easily be bypassed when the product does not require pasteurisation, while still having a bulk of the pasteuriser that is no greater than traditional pasteurisers, and which allows to simplify the layout of the entire production line.

A further technical task of the present invention is to obtain a tunnel pasteuriser that can indifferently be constructed with one or more superposed levels, and which can be provided both with pre-pasteurisation areas and with pasteurisation areas, similarly to known pasteurisers.

Yet another technical task of the present invention is to obtain a tunnel pasteuriser that maintains the capability to be subdivided into multiple sub-areas to allow the installation of the most sophisticated heat treatment control systems.

The specified technical task and the indicated aims are substantially achieved by a tunnel pasteuriser as described in the appended claims.

Further features and advantages of the invention shall become more readily apparent from the detailed description that follows of some preferred, but not exclusive embodiments of a tunnel pasteuriser, illustrated in the accompanying drawings, in which:
- Figure 1 shows a top schematic of a tunnel pasteuriser of the prior art;
- Figure 2 shows a top schematic view of the internal subdivision of a tunnel pasteuriser of the prior art;
- Figure 3 shows a three-quarter axonometric schematic view of a tunnel pasteuriser of the kind shown in Figure;
- Figure 4 shows a top schematic view of a tunnel pasteuriser according to the present invention;
- Figure 5 shows a top schematic view of the internal subdivision of a tunnel pasteuriser according to a first embodiment of the present invention;
- Figure 6 shows a top schematic view of the internal subdivision of a tunnel pasteuriser according to a second forma embodiment of the present invention;
- Figure 7 shows a three-quarter axonometric schematic view of a tunnel pasteuriser of Figure 5;
- Figure 8 shows a three-quarter axonometric schematic view of a tunnel pasteuriser of Figure 6; and
- Figure 9 shows the temperature profile within a tunnel pasteuriser of Figures 6 or 8.

With reference to the accompanying figures, the reference number 1 globally designates a tunnel pasteuriser according to the present invention.

The pasteuriser 1 comprises, first of all, a tunnel structure 2 which identifies within it at least a pasteurisation path 3 for the products to be treated, which develops starting from an entry section 4 to an exit section 5.

Along the pasteurisation path 3 are positioned, in order, at least a heating area 6, at least a heat treatment area 7 and at least a cooling area 8 for the products to be treated.

In the aforesaid different areas, the products to be treated, which are made to advance along the path 3 by a conveyor 9, are sprayed by spraying means 10 with a fluid (usually water) at a pre-set temperature, in known manners.

In the present invention, the pasteurisation path 3 develops according to a U shape, and the conveyor 9 is constituted by at least a first and by a second conveyor belt 11, 12, set side by side and with mutually opposite directions of motion, and by transfer means 13 which connect the two conveyor belts 11, 12 at an end.

The first conveyor belt 11 has a first product loading section 14 and a first product unloading section 15. Similarly, the second conveyor belt 12 has a first product loading section 16 and a second product unloading section 17.

The first product loading section 14 coincides with the entry section 4 of the path 3, whilst the second product loading section 16 coincides with the exit section 5 of the path 3.

Moreover, the first loading section 14 and the second unloading section 17 are positioned at a same side relative to the tunnel structure 2, and the first unloading section 15 and the second loading section 16 are also positioned at a same side relative to the tunnel structure 2, but opposite to the one where the first loading section 14 and the second unloading section 17 are positioned.

The transfer means 13 then transfer the product from the first unloading section 15 to the second loading section 16, and are advantageously constituted by a third conveyor belt 18 positioned transversely relative to the first and to the second conveyor belt 11, 12.

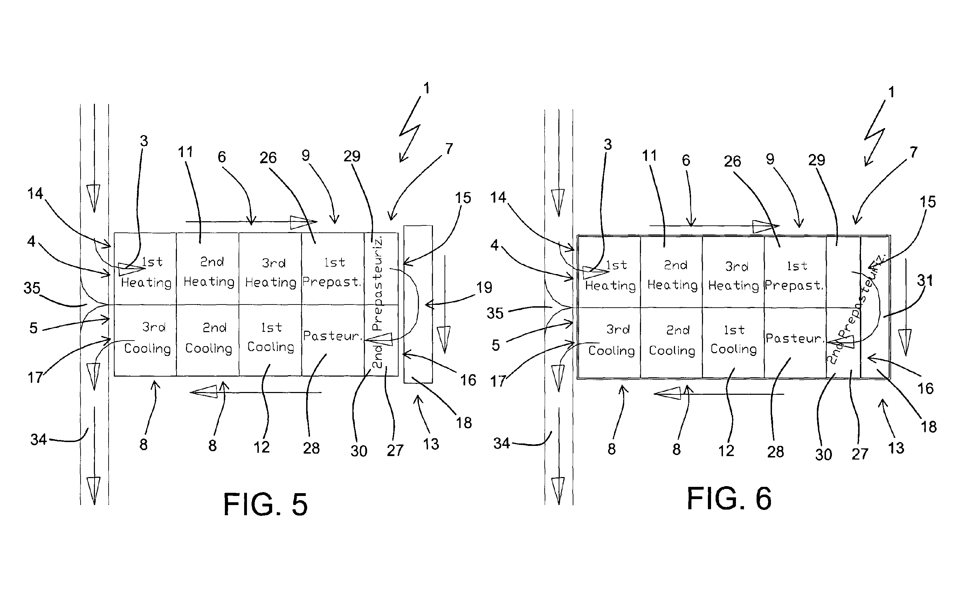

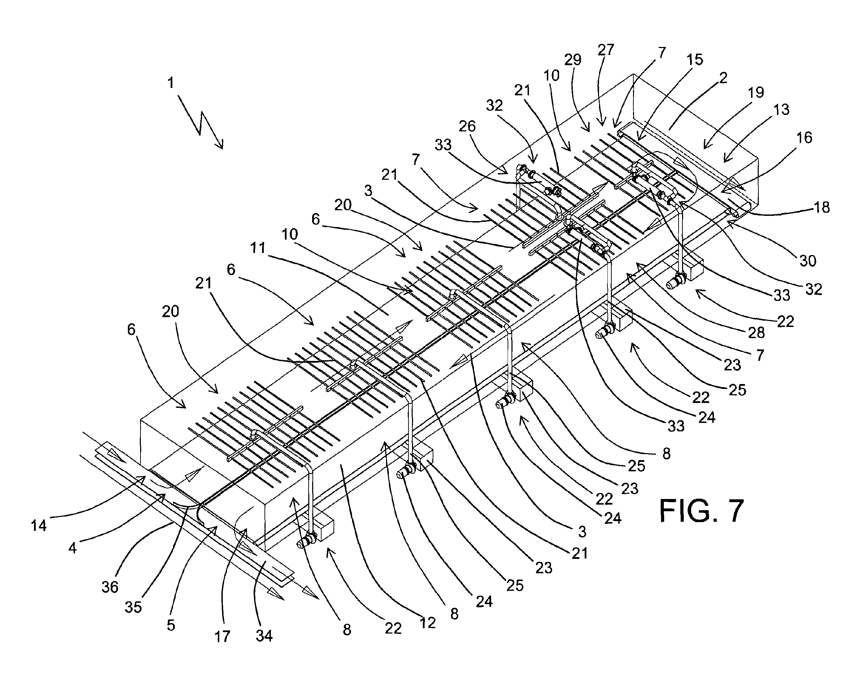

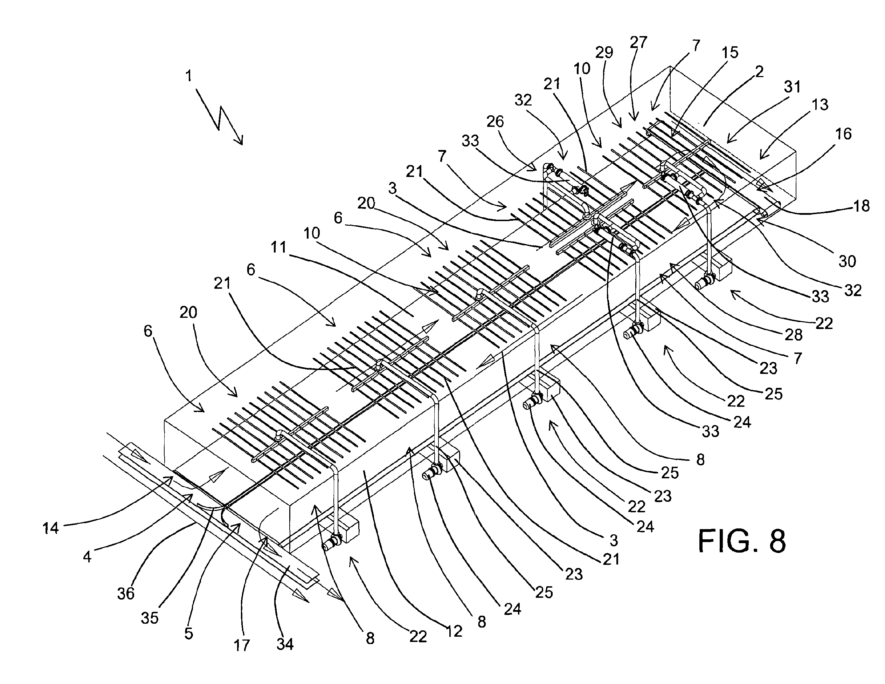

Depending on the situation, the third conveyor belt 18 can be positioned inside one of the areas for heating 6, for heat treatment 7, or for cooling 8, and can be involved by the fluid sprays (Figures 6 and 8), or be positioned in correspondence with an intermediate area 19, also located along the path 3 and not involved by the spraying means 10 (Figures 5 and 7).

In the embodiment illustrated in the accompanying figures, the heating area 6 and the cooling area 8 have substantially the same length and are positioned side by side respectively along the first conveyor belt 11 and along the second conveyor belt 12, the heating area 6 starting in correspondence with the entry section 4, and the cooling area 8 ending in correspondence with the exit section 5.

Advantageously , in any case, the pasteuriser 1 comprises a plurality of heating areas 6 in succession and a plurality of cooling areas 8 also in succession.

Each heating area 6 is set side by side to a cooling area 8.

In this way, in the pasteuriser 1 is identified a plurality of stations 20, each formed by a cooling area 8 and by a heating area 6 adjacent thereto.

Each station 20 extends transversely to the first and second conveyor belt 11, 12, and is characterised in that the treatment products have, in the heating area 6 and cooling area 8, relatively proximate temperatures.

In the present invention, spraying means 10 are constituted by a plurality of mutually parallel holed conduits 21, fed by a plurality of hydraulic systems 22, each whereof comprises at least a tank 23 for collecting the fluid, positioned underneath the pasteurisation path 3, a pump 24 and conduits 25 connected between the tank 23 and the pump 24 and between the pump 24 and the spraying means 10.

In particular, the fluid collected by the collecting tank 23 positioned underneath a heating area 6 is at least partly sprayed by the spraying means 10 onto the products transiting through the cooling area 8 of the same station 20, whilst the fluid collected by the collecting tank 23 positioned underneath a cooling area 8 is at least partly sprayed by the spraying means 10 onto the products transiting through the heating area 6 of the same station 20.

In the illustrated embodiment in any case, the hydraulic system 22 related to two areas included in the same station 20 comprises a single tank 23 positioned both underneath the cooling area 8 and the heating area 6, a single pump 24 and single spraying means 10, in which each holed conduit 21 sprays in equal measures the cooling area 8 and the heating area 6. In this way this single tank 23 collects both the fluid that was sprayed onto the products in the heating area 6 and the fluid that was sprayed onto the products in the cooling area 8.

In the illustrated embodiment, the heat treatment area 7 is obtained astride the first and second conveyor belt 11, 12.

Advantageously in any case, the pasteuriser 1 also comprises multiple heat treatment areas 7, i.e. at least a pre-pasteurisation heat treatment area 26, 27 (advantageously the illustrated embodiments have a first one 26 and a second one 27) and at least a pasteurisation heat treatment area 28. Each of said heat treatment areas 26, 27 can also be further subdivided into sub-areas.

Figures 5 through 8 show, for example, installations in which the second pre-pasteurisation heat treatment area 27 is subdivided into at least a first sub-area 29 positioned along the first conveyor belt 11, and a second sub-area 30 positioned along the second conveyor belt 12, whilst the pasteurisation heat treatment area 28 is a single one.

In particular, Figures 6 through 8 also show a third sub-area 31 positioned along the third conveyor belt 18.

In Figures 5 through 7, instead, the third conveyor belt 18 coincides with an intermediate area 19, positioned between the two sub-areas 29, 30 into which is divided the second pre-pasteurisation area, which lacks spraying means 10.

Moreover, the pasteurisation area 28 is set side by side to the first pre-pasteurisation area 26,but it is hydraulically independent thereof (each of them has its own collecting tank 23, its own pump 24 and its own spraying means 10), whilst the second pre-pasteurisation area 27 comprises a single tank 23 which extends underneath all of its sub-areas, with single spraying means 10.

In correspondence with the heat treatment area or areas 7, moreover, the tunnel pasteuriser 1 comprises means 32 for heating the fluid, substantially constituted by a heat exchanger 33 connected to a heat source (not shown), which provide the thermal energy required for the operation of the installation.

Additionally, an auxiliary conduit (not shown) can also be provided, which allows to bleed off heated fluid from the area provided with the heating means 32 towards the heating area 6, when starting up the pasteuriser 1.

At the entry and exit sections 4, 5 of the pasteurisation path 3, the pasteuriser 1 can also be operatively associated to a fourth conveyor belt 34 for feeding and removing the products.

The fourth belt serves the purpose of feeding the products to be treated to the pasteuriser 1 and removing therefrom the treated products, and for this purpose it is associated to a guiding element 35, movable between two operative positions.

When it is in a first operative position (Figures 5 through 8) the guiding element 35 is operatively associated to the fourth conveyor belt 34 and it guides the products as they enter and exit the pasteurisation path 3. On the contrary, when it is in the second operative position (not shown) it does not interfere with the fourth conveyor belt 34 and thus allows the products carried by the fourth conveyor belt 34 to bypass the pasteurisation path 3 (following the path 3 indicated by the arrow 36 in Figures 7 and 8).

Advantageously, said guiding element 35 can be constituted by a removable shaped element.

Although the accompanying figures show a pasteuriser 1 provided with a single pasteurisation path 3, the present invention also relates to pasteurisers provided with multiple superposed pasteurisation paths 3.

In this case, the pasteuriser 1 will comprise a plurality of superposed conveyors 9 (hence a plurality of first 11, second 22, third 18 and possibly also fourth conveyor belts 34), advantageously inserted within the same heating areas 6, heat treatment areas 7 and cooling areas 8. In this case, therefore, it will be possible to maintain, for each area 6, 7 ,8, a single hydraulic system 22, appropriately dimensioned, which allows to pasteurise products on all superposed levels. In particular, the fluid sprayed onto the products of the top level will successively pass through the related conveyor belt 11, 12, 18 (which normally allows the passage of the fluid) to the products of the underlying level and so on.

Additionally, the present invention further relates to pasteurisation installations constituted by one or more pasteurisers 1 of the kinds described heretofore, mounted one above the other. The operation of the tunnel pasteuriser 1 of the present invention is the following.

The products carried by the fourth conveyor belt 34 are thrust against the guiding element 35 which is in the first operative position and hence addressed thereby into the pasteuriser 1.

After travelling through the entry section 4 they enter the first heating area 6 where they are sprayed with fluid which has been heated in contact with the products that transit through the last cooling area 8.

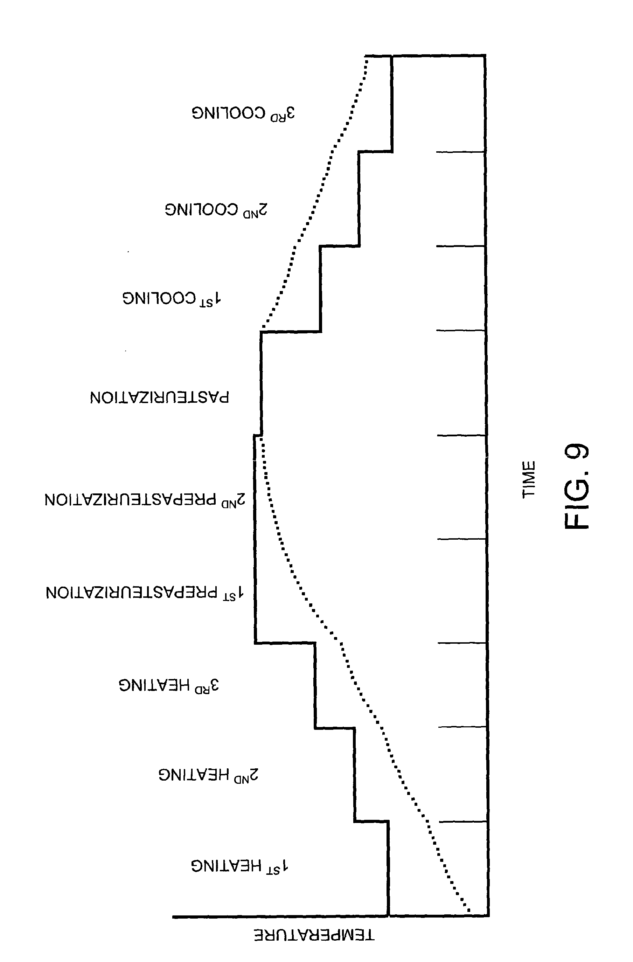

Since the collecting tank 23 is a single one for said areas, the fluid contained therein at steady state will have an intermediate temperature between the temperature of the products being heated and that of the products being cooled (Figure 9).

A similar process takes place for the subsequent heating areas 6.

Subsequently, the products enter the first pre-pasteurisation area 26 and therefrom into the second pre-pasteurisation area 27 where they are sprayed with the fluid heated by the heating means 32.

While they travel through the second pre-pasteurisation area 27, the products pass onto the third conveyor belt 18 and subsequently, thanks also to the aid of a guide which is not shown herein, onto the second conveyor belt 12, where they encounter in succession the pasteurisation area 28 (with fluid heated to the pasteurisation temperature of the product, which is lower than that of the fluid in the pre-pasteurisation area, in known fashion) and the cooling areas 8 whence they lastly return on the fourth conveyor belt 34.

Figure 9 schematically shows the profile versus time (determined with constant speed of advance, so that time corresponds with the distance 3 travelled inside the pasteuriser 1) of the temperature of the products (dotted line) and of the temperature of the spraying water (continuous line) inside the pasteuriser 1, in the case of pasteuriser 1 of Figure 6 or 8.

When instead products that do not require such a treatment transit on the line in which the pasteurisation installation is mounted, it is sufficient to move the guiding element 35 to the second operative position, so the products remain on the fourth conveyor belt 34 and can bypass the pasteuriser 1.

The present invention therefore achieves important advantages.

In the first place, the pasteuriser of the present invention allows nearly to halve the number of pumps, of collecting tanks, of manifolds and of process water distribution systems relative to traditional pasteurisers, simplifying the layout of the entire production line.

In particular, the pipelines on the roof of the pasteuriser are substantially eliminated, which facilitates maintenance operations.

The water that is cooled to heat the incoming cold bottles is collected in the same tank as the water heated by the outgoing hot bottles.

The installation thereby achieves the heat recovery action that in traditional pasteurisers is effected by exchanging process water, by means of long pipelines, between the tank of the first heating and the sprays of the last cooling, and so on.

The pre-pasteurisation and pasteurisation areas are thermally independent and this allows to maintain the capability of installing the most sophisticated control systems currently available.

Secondly, the pasteuriser can easily be bypassed when the product does not need to be pasteurised, although the overall bulk of the pasteuriser is identical to that of a traditional pasteuriser with corresponding productivity, and the same capability to perform the pre-pasteurisation treatment.

Additionally, the tunnel pasteuriser can indifferently be constructed with one or more superposed levels and, as stated, it can be provided both with pre-pasteurisation areas and with pasteurisation areas similarly to the best pasteurisers known today.

A further advantage of the installation configuration proposed with the present invention derives from the positioning of the heating systems, which can be concentrated at an end of the pasteuriser, thus allowing a more economical and rational disposition of the pipelines and of the systems for controlling and regulating heat.

It should also be noted that the present invention is relatively easy to construct and that the cost connected with the implementation of the invention is not very high.

The invention thus conceived can be subject to numerous modifications and variations, without thereby departing from the scope of the inventive concept that characterises it.

All components can be replaced with technically equivalent elements and in practice all materials employed, as well as the shapes and dimensions of the various components, may be any depending on requirements.

## Claims

1. Tunnel pasteuriser comprising
a tunnel structure (2) identifying at least a pasteurisation path (3) extending between an entry section (4) and an exit section (5), along said path (3) there being sequentially obtained at least a heating area (6), at least a heat treatment area (7) and at least a cooling area (8);
at least a conveyor (9) to advance the product along said path (3) through said areas;
spraying means (10) for spraying the products moving along said path (3) with a fluid at pre-set temperatures in correspondence with each of said heating (6), heat treatment (7), and cooling areas (8);
**characterised in that** said conveyor (9) comprises:
at least a first conveyor belt (11) having a first product loading section (14) coinciding con said entry section (4) and a first product unloading section (15);
a second conveyor belt (12) set side by side to the first conveyor belt (11), with opposite direction of movement, and having a second product loading section (16) and a second product unloading section (17) coinciding with said exit section (5);
transfer means (13) for transferring the product from said first unloading section (15) to said second loading section (16);
said first loading section (14) and said second unloading section (17) being positioned at the same side relative to the tunnel structure (2) a tunnel; and
said first unloading section (15) and said second loading section (16) being positioned at the same side relative to the tunnel structure (2), opposite that where the first loading section (14) and the second unloading section (17) are positioned.

2. Tunnel pasteuriser as claimed in claim 1 **characterised in that** said transfer means(13) comprise a third conveyor belt (18) positioned transversely relative to the first and to the second conveyor belt (11), (12).

3. Tunnel pasteuriser as claimed in claim 2 **characterised in that** at least one of said heating area (6), heat treatment area (7) or cooling area (8) also involves said third conveyor belt (18).

4. Tunnel pasteuriser as claimed in claim 2 **characterised in that** said third conveyor belt (18) is positioned in correspondence with an intermediate area (19) not involved by said spraying means (10).

5. Tunnel pasteuriser as claimed in any of the previous claims **characterised in that** it further comprises, in each of said areas (6), (7), (8), at least a tank (23) for collecting the fluid sprayed by the spraying means (10), positioned underneath said pasteurisation path (3).

6. Tunnel pasteuriser as claimed in claim 5 **characterised in that** the fluid collected from the collecting tank (23) positioned underneath the heating area (6) is sprayed by the spraying means (10) onto the products transiting through the cooling area (8) and **in that** the fluid collected by the collecting tank (23) positioned underneath the cooling area (8) is sprayed by the spraying means (10) onto the products transiting through the heating area (6).

7. Tunnel pasteuriser as claimed in any of the previous claims **characterised in that** said heating area (6) and said cooling area (8) are obtained side by side to one another respectively along the first conveyor belt (11) and along the second conveyor belt (12).

8. Tunnel pasteuriser as claimed in claim 7 **characterised in that** said heat treatment area (7) is obtained astride the first and second conveyor belt (11), (12).

9. Tunnel pasteuriser as claimed in claims 5 and 7 **characterised in that** it comprises a single tank (23) positioned underneath said cooling area (8) and said heating area (6), the fluid collected by said single tank (23) being sprayed onto the products transiting through the cooling area (8) and the heating area (6).

10. Tunnel pasteuriser as claimed in claim 7 **characterised in that** it comprises a plurality of heating areas (6) and a plurality of cooling areas (8), set mutually side by side to define a plurality of stations (20) each comprising a cooling area (8) and a heating area (6), and extending transversely to said first and second conveyor belt (11), (12).

11. Tunnel pasteuriser as claimed in claims 9 and 10 **characterised in that** it comprises a single collecting tank (23) for each of said stations (20) positioned underneath the related station (20), the fluid collected by said single tank (23) being sprayed onto the products transiting the respective cooling area (8) and heating area (6).

12. Tunnel pasteuriser as claimed in any of the previous claims **characterised in that** it comprises at least a pre-pasteurisation heat treatment area (26), (27) and a pasteurisation heat treatment area (28).

13. Tunnel pasteuriser as claimed in any of the previous claims **characterised in that** it further comprises a fourth feeding and removing conveyor belt (34), operatively associated to said entry and exit sections (4), (5) to feed the products to be treated to the pasteuriser (1) and to remove the treated products, and **in that** it further comprises at least a guiding element (35) movable between a first operative position in which it is operatively associated to said fourth conveyor belt (34) to guide the products as they enter and exit the pasteurisation path (3), and a second operative position in which it does not interfere with said fourth conveyor belt (34) and it allows the products carried by the fourth conveyor belt (34) to bypass the pasteurisation path (3).

14. Tunnel pasteuriser as claimed in any of the previous claims **characterised in that** it further comprises means (32) for heating the fluid, operatively associated to one or more of said areas (6), (7), (8).

15. Tunnel pasteuriser as claimed in claim 14 **characterised in that** said heating means (32) are associated to said heat treatment area (7).

16. Tunnel pasteuriser as claimed in any of the previous claims **characterised in that** said tunnel structure (2) comprises a plurality of said pasteurisation paths (3), mutually superposed and parallel, and **in that** it comprises a conveyor (9) for each of said paths (3), said spraying means (10) spraying the movable products along all said paths (3).

17. Tunnel pasteuriser as claimed in claim 16 **characterised in that** said spraying means (10) are single means and spray directly the topmost pasteurisation path (3), the underlying paths (3) being sprayed by the fluid that drips from the upper path (3).

18. Pasteurisation installation **characterised in that** it comprises a plurality of tunnel pasteurisers (1) as claimed in any of the previous claims, arranged one above the other.
